# EUROPÄISCHE PATENTSCHRIFT

(11) **EP 1 332 936 B1**
(45) Veröffentlichungstag und Bekanntmachung des Hinweises auf die Patenterteilung: **13.09.2006**
(21) Anmeldenummer: 03001515.0
(22) Anmeldetag: 23.01.2003
(51) Int. Cl.: B60S 9/08

(54) **Stützwinde**
Screw jack
Cric

(30) Priorität: 05.02.2002 DE 10205286
(43) Veröffentlichungstag der Anmeldung: 06.08.2003
(73) Patentinhaber: Jost-Werke GmbH & Co. KG, 60528 Frankfurt am Main (DE)
(72) Erfinder: Müller, Gerald, 63179 Obertshausen (DE); Richter, Martin, 60316 Frankfurt (DE); Algüera, José, 63739 Aschaffenburg (DE)
(74) Vertreter: Fuchs Mehler Weiss & Fritzsche

(56) Entgegenhaltungen:
- DE-A1- 19 836 635
- DE-U1- 8 813 558
- US-A- 3 151 707

## Beschreibung

Die Erfindung betrifft eine Stützwinde mit einem in seiner Höhe teleskopartig verfahrbaren, eine Außenhülse und eine Innenhülse aufweisenden Abstützelement, mit einer in dem Abstützelement gelagerten, von einer Antriebseinrichtung antreibbaren Spindel, und mit einer mit der Spindel zusammenwirkenden, mit der Innenhülse in Eingriff stehenden Spindelmutter.

Eine derartige Stützwinde wird beispielsweise in der DE 198 36 635 A1 beschrieben. Die bekannte Stützwinde weist eine äußere und innere Hülse auf, welche mittels einer an der inneren Hülse befestigten Spindelmutter durch Drehen der Spindel gegenüber der ortsfesten äußeren Hülse verfahren werden kann. Bei einem Anbau der Stützwinden an einen Sattelschlepperauflieger wird jeweils eine der Stützwinden beidseitig der Aufliegerlängsachse in dem vorderen Bereich des Aufliegers angeordnet, wobei beide Stützwinden über eine Welle verbunden sind. Durch Drehen einer an einer Stützwinde angreifenden Handkurbel können beide Stützwinden gleichzeitig teleskopiert werden.

Häufig werden die Stützwinden jedoch auch zum Abstützen von Aufliegern im Achsbereich von Silofahrzeugen oder Kippern nachträglich angebracht, um während des Entleerungsvorganges die Hinterachsen und hier insbesondere die Luftfederung zu entlasten. Aufgrund der vielfach höheren Anzahl von Ein- und Ausfahrvorgängen bei der Anbringung der Stützwinden im Achsbereich gegenüber der ursprünglich vorgesehenen Montage im vorderen Bereich des Aufliegers, bei der die Stützwinden nur bei An- und Abkuppelvorgängen verfahren werden, unterliegen die achsunterstützenden Stützwinden einen deutlich höheren Verschleiß und somit einer deutlich geringeren Lebensdauer. Hiervon sind in erster Linie die Spindel sowie die Spindelmutter betroffen.

Die verschleißbedingten Beschädigungen der Spindel oder der Spindelmutter stellen in der Praxis ein geringeres Problem dar, da in einem derartigen Fall die Stützwinde blockiert ist und die Beschädigung bereits bei dem Aus- oder Einfahren der Stützwinde erkennbar ist. Ein hohes Gefährdungspotential dagegen stellt ein plötzlich auftretender Bruch der Spindelmutter dar, da die Stützwinde keine Kräfte mehr übertragen kann und sich unter Belastung die Innenhülse in die Außenhülse schiebt. Hierdurch kann das Fahrzeug mit bereits aufgestelltem Transportbehälter in Richtung der defekten Stützwinde kippen und im Umkreis von mehreren Metern erhebliche Personen- und Sachschäden verursachen.

Folglich besteht die Aufgabe der Erfindung darin, eine Stützwinde mit einer Sicherung bereitzustellen, die ein Einschieben der Innenhülse in die Außenhülse nach einem Bruch der Spindelmutter verhindert.

Die Aufgabe wird mit einer Stützwinde gelöst, bei der auf der Spindel zusätzlich zu der Spindelmutter eine gegenüber der Innenhülse drehfest angebrachte Sicherungsmutter angeordnet ist.

In einer bevorzugten Ausgestaltung ist die Sicherungsmutter unterhalb der Spindelmutter angeordnet. Dabei kann die Sicherungsmutter drehfest mit der Innenhülse verbunden sein.

In einer weiteren vorteilhaften Ausführungsform ist die Sicherungsmutter in axialer Richtung der Spindel beweglich abgeordnet.

Bei einem Drehen der Spindel verschiebt die fest mit der Innenhülse verbundene Spindelmutter, die Innenhülse gegenüber der Außenhülse. Die in axialer Richtung der Spindel beweglich angebrachte Sicherungsmutter ist ebenfalls mit der Innenhülse verbunden, überträgt jedoch aufgrund der besonderen beweglichen Anbringung keine Kräfte. Der Kraftfluß erfolgt ausschließlich von der Innenhülse über die Spindelmutter auf die Spindel. Der wesentliche Vorteil dieser konstruktiven Ausgestaltung liegt darin, daß die Sicherungsmutter kaum Belastungen aufnimmt, dadurch nur geringem Verschleiß unterliegt und im Falle des Bruchs der Spindelmutter in der Lage ist, hohe Kräfte entsprechend einer neuwertigen Spindelmutter aufzunehmen. Eine feste Anbringung der Sicherungsmutter an der Innenhülse würde im betrieblichen Einsatz zu einer Verteilung der Last und somit zu einem reduzierten Verschleiß der einzelnen Muttern führen. Im Falle eines Spindelmutterbruches stünde jedoch als Sicherungsmutter nur eine Sicherungsmutter mit einem der Spindelmutter vergleichbaren Verschleißzustand und verminderter Sicherheit gegen Bruch für die Lastaufnahme zur Verfügung.

Vorzugsweise liegt die Sicherungsmutter bei Lastaufnahme einseitig auf einem auf der Innenwand der Innenhülse angeordneten Stützrand auf. Zu der Lastaufnahme kommt es nach einem Bruch der Spindelmutter durch die auf der Stützwinde aufliegende Gewichtskraft des Aufliegers. Aufgrund des einseitig angebrachten Stützrandes vollzieht die Sicherungsmutter bei einer mittig, in axialer Richtung der Spindelmutter eingeleiteten Kraft, eine Schwenkbewegung um den Stützrand. Das Einschwenken der Sicherungsmutter wiederum verursacht ein irreversibles Verbiegen der vorher mittig in der Innenhülse gelagerten Spindel in Richtung der Wandung der Innenhülse. Das Verbiegen der Spindel führt zu einem Verklemmen der Sicherungsmutter und der Spindel, mit der Folge, daß die Innen- und Außenhülse bei Betätigung der Antriebseinrichtung nicht mehr teleskopiert werden können. Hierdurch wird vermieden, daß die Stützwinde nach einem Bruch der Spindelmutter, wissentlich oder aus Unkenntnis des Bedieners über den Bruch der Spindelmutter, weiterbenutzt und möglicherweise die redundante Absicherung durch einen Betrieb der Stützwinde ohne Spindelmutter umgangen werden kann.

In einer besonderen Ausgestaltung ist der Stützrand aus einem ortsfest in der Innenhülse angeordneten Innenrohr mit spindelmutterseitig schräger Stirnseite ausgebildet. Das Innenrohr weist äußere Abmessungen auf, die ungefähr den inneren Abmessungen der Innenhülse entsprechen. In unbelastetem Zustand liegt die Sicherungsmutter lose auf dem höheren Rand der Stirnseite einseitig auf. Bei Lastaufnahme der Sicherungsmutter beginnt diese zu kippen und verbiegt dabei die Spindel. Die Kippbewegung der Sicherungsmutter wird durch eine umfängliche Auflage des Randes der Spindelmutter auf der Stirnseite des Innenrohres begrenzt. Hieraus ergibt sich eine besonders stabile Auflage. Darüber hinaus läßt sich das Innenrohr fertigungstechnisch einfach herstellen, da das Erstellen der schrägen Stirnseite, ggf. weiterer Bohrungen und Bearbeitungsschritte zunächst am Innenrohr durchgeführt werden kann und nachfolgend lediglich das fertig bearbeitete Innenrohr in die Innenhülse eingeschoben und verschweißt zu werden braucht.

In einer vorteilhaften Ausgestaltung sind die Außenmaße der Sicherungsmutter kleiner als die Innenmaße der Innenhülse ausgebildet. Diese Ausgestaltung unterstützt das gewünschte Verbiegen der Spindel unmittelbar nach dem Bruch der Spindelmutter, da die Sicherungsmutter zunächst keine Kräfte an die Wände der Innenhülse ableitet, sich im wesentlichen an der Spindel abstützt und dadurch eine maximale Biegebeanspruchung der Spindel erreicht. Erst in einem späteren Stadium legt sich die Sicherungsmutter an die dem Stützpunkt gegenüberliegende Wand der Innenhülse an und beginnt diese, bei weiterer Einleitung einer Last, in radialer Richtung auszubeulen. Die unteren Grenzen der Abmessungen der Sicherungsmutter sollten jedoch über den Abmessungen der in dem Innenrohr angeordneten Innenhülse bzw. den Innenmaßen des in der Innenhülse angeordneten Stützrandes liegen, um ein Abgleiten der Sicherungsmutter in die Innenhülse zu verhindern und somit ein Verbiegen der Spindel zu gewährleisten.

In einer weiteren günstigen Ausführungsform ist die Sicherungsmutter mittels zweier gegenüberliegender Bolzen mit dem Innenrohr und der Innenhülse verbunden. Die Länge der Bolzen ist derart bemessen, daß sie sowohl durch die Innenhülse als auch das darin angeordnete Innenrohr hindurchreichen und die Sicherungsmutter beidseitig lagern. Bei Lastaufnahme der Sicherungsmutter unterstützen die Bolzen ein umfängliches Aufliegen des Randes der Sicherungsmutter auf der Stirnseite des Innenrohres und verringern das Risiko einer Aufweitung des Innenrohres, durch welche die Sicherungsmutter in das Innenrohr hineingedrückt werden könnte.

Vorteilhafterweise sind die Bolzen mittels Langlöcher in Innenrohr und Innenhülse gelagert. Bei Lastaufnahme der Sicherungsmutter stützt sich die Sicherungsmutter an dem Stützrand ab und schwenkt um diesen. Mit Hilfe der als Langlöcher ausgebildeten Bolzenaufnahmen wird das Kippen der Sicherungsmutter und damit das Verbiegen der Spindel dahingehend unterstützt, daß nur geringe Kräfte für das Verschieben der Bolzen in den Bohrungen der Innenhülse und des Innenrohres aufgezehrt werden.

Günstigerweise ist die durch die maximale Lochweite verlaufende Achse der Langlöcher in Richtung der dem Stützrand gegenüberliegenden Seitenwand geneigt. Hierdurch wird der durch die Bolzenlagerung hervorgerufene Widerstand weiter verringert, da kaum Material der Innenhülse bzw. des Innenrohres durch die Bolzen verdrängt zu werden braucht. Die in der Sicherungsmutter angreifenden Bolzen bewegen sich bei einem Schwenken der Sicherungsmutter um den Stützrand auf einem Kreisabschnitt, an dem tangential die Neigung der durch die maximale Lochweite verlaufenden Achse angepaßt ist.

Vorzugsweise ist eine Schweißnaht des Innenrohres auf der dem Stützrand gegenüberliegenden Seitenwand ausgebildet.

In Abweichung der vorstehend beschriebenen Ausführungsform kann die Sicherungsmutter jedoch auch oberhalb der Spindelmutter angeordnet sein.

Vorteilhafterweise weist die Sicherungsmutter bei dieser Ausführungsform auf ihrer Unterseite abschnittsweise einen Rücksprung auf. Bei einem Bruch der Spindelmutter versucht sich diese auf der Spindel nach oben zu schieben, kommt jedoch an der Unterseite der Sicherungsmutter zur Auflage. Aufgrund des abschnittsweise ausgebildeten Rücksprungs wird die Last nur im Kontaktbereich zwischen Spindelmutter und Sicherungsmutter übertragen, so daß sich die Sicherungsmutter durch den einseitigen Krafteintrag in Richtung des Rücksprungs neigt und dadurch die Spindel verbiegt.

Als besonders vorteilhaft hat es sich in beiden Ausführungsformen erwiesen, die Materialien der Spindel und der Sicherungsmutter derart auszuwählen, daß es bei der Lastaufnahme der Sicherungsmutter zu einem Festfressen von Spindel und Sicherungsmutter kommt.

Anhand der in den nachfolgenden Figuren dargestellten zwei Ausführungsformen wird die Erfindung beispielhaft näher erläutert. Es zeigen die
- Figur 1: einen Längsschnitt durch die erfindungsgemäße Stützwinde gemäß der ersten Ausführungsform;
- Figur 2a: einen Längsschnitt durch das Innenrohr mit schräger Stirnseite und Langloch gemäß einer Stützwinde der ersten Ausführungsform;
- Figur 2b: eine Draufsicht auf das Innenrohr gemäß Figur 2a;
- Figur 3: einen Längsschnitt von Innenrohr und unbelasteter Sicherungsmutter gemäß einer Stützwinde der ersten Ausführungsform;
- Figur 4: einen Längsschnitt von Spindelmutter und Sicherungsmutter bei unbeschädigter Spindelmutter gemäß einer Stützwinde der ersten Ausführungsform;
- Figur 5: einen Längsschnitt von Spindelmutter und Sicherungsmutter bei gebrochener Spindelmutter mit verbogener Spindel gemäß einer Stützwinde der ersten Ausführungsform;
- Figur 6: eine Draufsicht und Seitenansicht einer Sicherungsmutter gemäß einer Stützwinde der zweiten Ausführungsform;
- Figur 7: einen teilweisen Längsschnitt durch die Stützwinde gemäß der zweiten Ausführungsform;
- Figuren 8a,b: einen detailierten Längsschnitt durch den oberen Bereich der Stützwinde gemäß der zweiten Ausführungsform; und
- Figur 9: eine Ansicht gemäß Figur 8 bei gebrochener Spindelmutter mit verbogener Spindel.

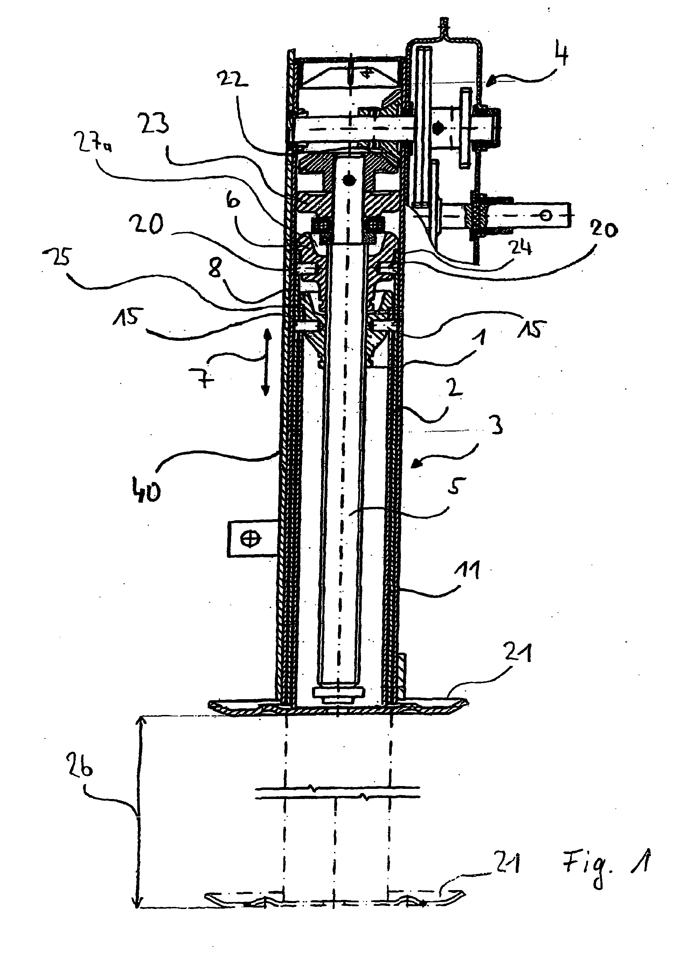

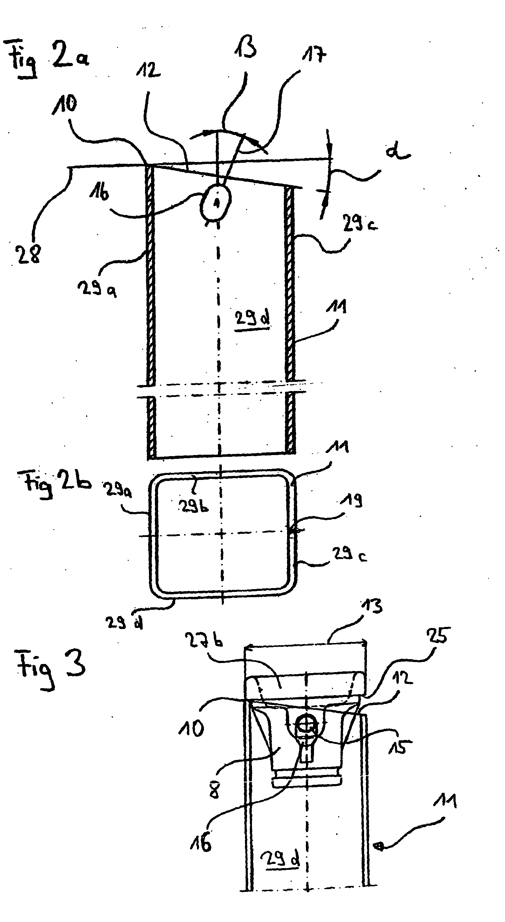

Die Figur 1 zeigt einen Längsschnitt durch die erfindungsgemäße Stützwinde gemäß der ersten Ausführungsform im eingefahrenen Zustand mit einem teleskopartig in seiner Höhe verfahrbaren Abstützelement 3, welches eine Innenhülse 2 und eine Außenhülse 1 umfaßt. In dem mit unterbrochenen Linien dargestellten ausgefahrenen Zustand stützt sich die Innenhülse 2 über den Stützfuß 21 auf dem Boden ab. Mit einer Anschraubplatte 40 kann die Stützwinde am Fahrzeug befestigt werden.

Im oberen Bereich der Außenhülse 1 ist die Antriebseinrichtung 4 angebaut, die über eine Kegelradanordnung 22 ein Drehmoment auf die zentriert in der Außen- und Innenhülse 1, 2 gelagerte Spindel 5 überträgt. Unterhalb der Kegelradanordnung 22 ist die Spindel 5 in einem Spindellager 23 gelagert.

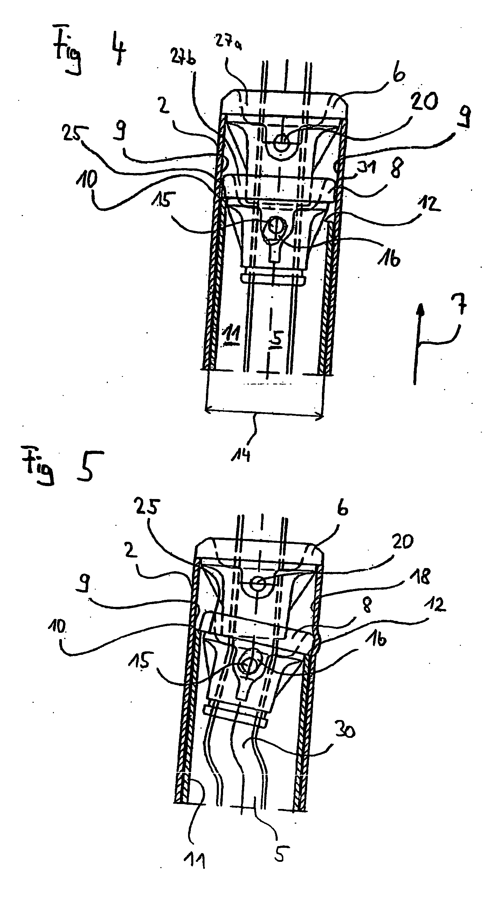

Im eingefahrenem Zustand der Stützwinde befindet sich unmittelbar unterhalb des Lagers 23 die Spindelmutter 6, die durch Drehen der Spindel 5 in axialer Richtung 7 der Spindel 5 verschoben werden kann. Hierzu ist die Spindelmutter 6 gegenüber der Spindel 5 gegen Mitdrehen gesichert, wobei die Sicherung einerseits eine Vierkantprofilform des Abstützelementes 3 (siehe Figur 2b), als auch zusätzlich die jeweils an den gegenüberliegenden Seiten, die Innenhülse 2 mit der Spindelmutter 6 verbindende Bolzen 20, umfaßt. Die Bolzen 20 haben darüber hinaus die Aufgabe, in angehobenem Zustand aus dem Eigengewicht der Innenhülse 2, dem Innenrohr 11 sowie dem Stützfuß 21 resultierende Zugkräfte aufzunehmen und dadurch ein Anheben des Stützfußes 21 zu ermöglichen.

Um einen möglichst großen Ausfahrweg 26 zu realisieren, weist die Spindelmutter 6 in ihrem oberen zentrischen Bereich eine Ausnehmung 27a auf, die derart bemessen ist, daß die Spindelmutter 6 in der Ausnehmung 27a teilweise das Spindellager 23 aufnehmen kann.

Im ausgefahrenen Zustand der Innenhülse 2 sind die Spindelmutter 6 und die Sicherungsmutter 8 auf der Spindel 5 nach unten gewandert (nicht eingezeichnet). Mit Bodenkontakt des Stützfüßes 21 lastet auf dem Stützfuß 21, der Innenhülse 2, der Spindelmutter 6 und der Spindel 5 ein Teil des Aufliegergewichtes. Zur besseren Aufnahme der Kräfte ist die Spindelmutter 6 mit einem nach außen umlaufend überstehenden Rand 24 ausgestattet, unter welchen die Innenhülse 2 stößt. Hierdurch wird die Flächenpressung an den beiden Bolzen 20 reduziert und die auftretenden Kräfte gleichmäßig in die Spindelmutter 6 eingeleitet.

Unterhalb versetzt zu der Spindelmutter 6, ist in der Figur 1 die Sicherungsmutter 8 auf der Spindel 5 zu erkennen. Die Sicherungsmutter 8 ist bezüglich der Formgebung identisch mit der Spindelmutter 6, weist jedoch senkrecht zur axialen Richtung 7 der Spindel 5 geringere Abmessungen auf. Dieses ist deshalb notwendig, da die Sicherungsmutter 8 mit radialem Spiel innerhalb der Innenhülse 2 mittels Bolzen 15 fixiert ist. Abweichend von der konstruktiven Ausgestaltung von Spindelmutter 6 und Innenhülse 2 ist jedoch das mit der Sicherungsmutter 8 zusammenwirkende Innenrohr 11 ausgebildet, wie im Detail in Figur 2a zu erkennen ist.

Die Figur 2a zeigt einen Längsschnitt durch das Innenrohr 11 mit schräger Stirnseite 12 und einem in der räumlichen Nähe der Stirnseite 12 eingebrachten Langloch 16 gemäß einer Stützwinde der ersten Ausführungsform. Der Winkel α stellt dabei den Winkel zwischen einer senkrecht zum Innenrohr stehenden Achse 28 und der Stirnseite 12 des Innenrohres dar und beträgt in der Darstellung der Figur 2a ca. 10°.

Einen Abschnitt der Stirnseite 12 umfaßt den Stützrand 10, auf dem die Sicherungsmutter 8 (nicht eingezeichnet) bei einsatzbereiter Stützwinde einseitig aufliegt. In der Figur 2a ist die Stirnfläche der Seitenwand 29a als Stützrand 10 ausgebildet.

In der in Figur 2a sichtbaren Seitenwand 29d ist das Langloch 16 eingebracht, dessen in der maximalen Lochweite liegenden Achse 17 unter einem Winkel β aus der axialen Erstreckung des Innenrohres 11 ausgelenkt ist. Die Schrägstellung der Achse 17 beträgt in der Darstellung der Figur 2a ca. 25°.

Die Figur 2b stellt eine Draufsicht des als Vierkantrohr ausgebildeten Innenrohres 11 gemäß Figur 2a dar. In der Mitte der Seitenwand 29c ist die in der Bildebene verlaufende Schweißnaht 19 des Innenrohres 11 sichtbar.

In der Figur 3 ist das Innenrohr 11 mit der Sicherungsmutter 8 in eingebauter Stellung gemäß einer Stützwinde der ersten Ausführungsform schematisch dargestellt. Dabei liegt die Sicherungsmutter 8 auf dem Stützrand 10 der Stirnseite 12 des Innenrohres 11. Das Außenmaß 13 der Sicherungsmutter 8 ist kleiner als das nicht dargestellte Innenmaß 14 (siehe Figur 4) der Innenhülse 2, so daß im eingebauten Zustand ein Zwischenraum 31 zwischen der Sicherungsmutter 8 und der Innenhülse 2 (s. Fig. 4) verbleibt.

Das Innenrohr 11 hat in der dargestellten besonderen Ausgestaltung der Figur 3 ein Langloch 16 in der Seitenwand 29d des Innenrohres 11, dessen in maximaler Lochweite verlaufende Achse 17 in axialer Richtung des Innenrohres 11 läuft, d.h., dessen Winkel β = 0° beträgt. Die Sicherungsmutter 8 weist ebenfalls eine topfförmige Ausnehmung 27b an ihrer Oberseite auf, in die ein unterer Teilabschnitt der Spindelmutter 6 (nicht eingezeichnet) eintauchen kann. Die konstruktiv gleiche Ausgestaltung der Spindelmutter 6 und der Sicherungsmutter 8 ist aus fertigungstechnischen Gründen ohnehin sinnvoll, da auf praxiserprobte, standardisierte Bauteile zurückgegriffen werden kann.

Die Figur 4 zeigt die Spindelmutter 6 und die Sicherungsmutter 8 auf der Spindel 5, die über Bolzen 15, 20 an der Innenhülse 2 bzw. dem Innenrohr 11 befestigt sind, gemäß einer Stützwinde der ersten Ausführungsform. Hierbei verbinden die beiden Bolzen 20 formschlüssig die Spindelmutter 6 mit der Innenhülse 2, während die Bolzen 15 durch den oberen Bereich der schräggestellten (vergleiche Figur 2a) Langlöcher 16 hindurchgeührt sind und dadurch die Sicherungsmutter 8 mit dem Innenrohr 11 derart fixieren, daß die Sicherungsmutter 8 in axialer Richtung 7 der Spindel 5 mit geringem Spiel bewegbar ist.

Die in Figur 4 dargestellten Bauteile entsprechen der betrieblichen Anordnung einer funktionstüchtigen, unbeschädigten Stützwinde. Hierbei liegt die Sicherungsmutter 8 mit seitlichem Spiel zu der Innenfläche der Seitenwände 9 mit ihrem Rand 25 einseitig auf dem Stützrand 10 der Stirnseite 12 des Innenrohres 11 auf. Bei einem Teleskopieren der Innenhülse 2 laufen die Spindelmutter 6 und die Sicherungsmutter 8 auf dem Gewinde der Spindel 5 und verschieben dabei die Innenhülse 2 mit darin befestigtem Innenrohr 11 gegenüber der Außenhülse 1 (nicht eingezeichnet). Aufgrund der spielbehafteten Aufnahme der beiden Bolzen 15 in dem mit der Innenhülse 2 zusammengefügten Innenrohr 11, übernimmt die Sicherungsmutter 8 keine äußeren Lasten und läuft lose auf der Spindel 5 ab.

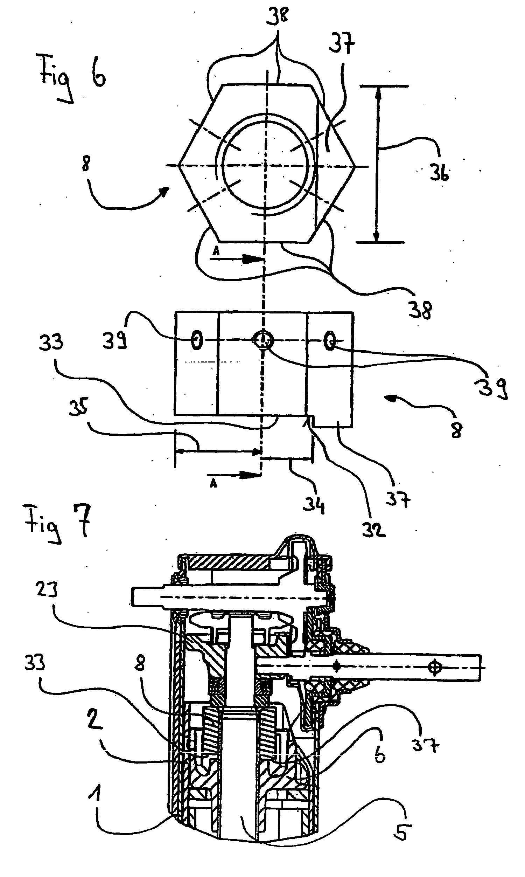

In Figur 5 dagegen sind die Spindelmutter 6 und die Sicherungsmutter 8, die Spindel 5 sowie die Innenhülse 2 und das Innenrohr 11 bei der Lastaufnahme der Sicherungsmutter 8 wegen Bruchs der Spindelmutter 6 dargestellt.

In die Sicherungsmutter 8 ist dabei über die Spindel 5 eine Kraft in Richtung des Stützfußes 21 (nicht eingezeichnet) eingeleitet worden. Daraufhin hat die Sicherungsmutter 8 ihre ursprüngliche Ausrichtung senkrecht zur Innenhülse 2 verlassen und sich um den Stützrand 10 bis zur umfänglichen Auflage des Randes 25 auf der Stirnseite 12 des Innenrohres 11 geschwenkt. Aufgrund der Schwenkbewegung haben auch die Bolzen 15 ihre ursprünglichen Positionen im oberen Bereich der Langlöcher 16 verändert und befinden sich nunmehr im unteren Bereich der Langlöcher 16.

Das eigentliche Ziel der Schwenkbewegung liegt jedoch darin, die Spindel 5 aus einer zentrischen Position in Richtung des Innenrohres 11 zu verbiegen und dadurch eine Sperrwirkung gegen eine weitere Benutzung zu erzielen. In der Figur 5 ist die Verbiegung 30 der Spindel 5, S-förmig unterhalb der Sicherungsmutter 8 zu erkennnen. Zusätzlich zu der Deformierung der Spindel 5 ist die Sicherungsmutter 8 auf der schrägen Stirnseite 12 abgerutscht und hat die dem Stützrand 10 gegenüberliegenden Seitenwand 18 der Innenhülse 2 eingedrückt, was zu einer zusätzlichen Blockierung der Sicherungsmutter 8 führt.

Die Figur 6 zeigt eine Draufsicht sowie eine Seitenansicht einer Sicherungsmutter 8 bei einer Stützwinde der zweiten Ausführungsform. Auf der Unterseite 32 der Sicherungsmutter 8 ist ein exzentrisch ausgebildeter Rücksprung 33 zu erkennen, der sich über einen Großteil der Unterseite 32 der Sicherungsmutter 8 erstreckt. In dem gezeigten Ausführungsbeispiel umfaßt der Rücksprung 33 einen Teilabschnitt 35 und den Mittenabstand 34 über jeweils das Außenmaß 36. Als restlicher vorstehender Bereich verbleibt der Stützsockel 37.

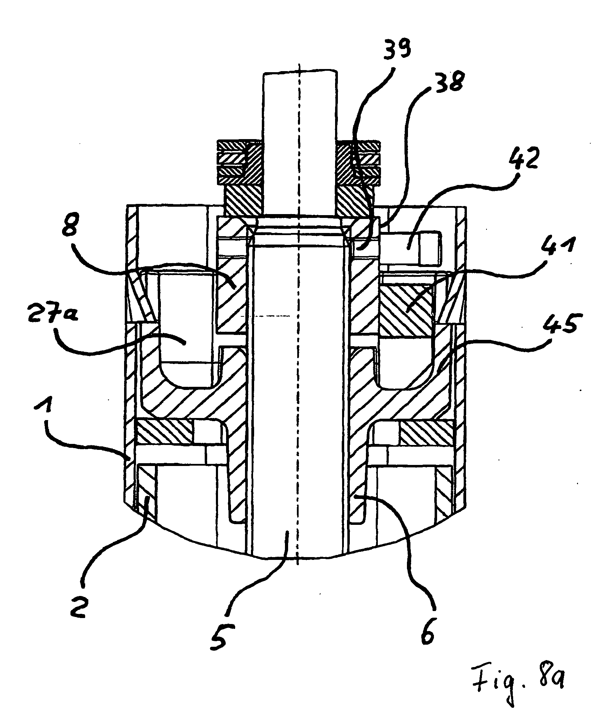

Weiterhin sind in der Figur 6 die sechs Schlüsselflächen 38 dargestellt, in welche jeweils eine Gewindebohrung 39 eingebracht ist. Nach Einlegen der Verdrehsicherungsplatte 41 zwischen eine der sechs Schlüsselflächen 38 und der Wandung 45 der Spindelmutter 6 wird oberhalb der Verdrehsicherungsplatte 41 in die Gewindebohrung 39 dieser Schlüsselfläche 38 ein Gewindebolzen 42 als Verliersicherung für die Verdrehsicherungsplatte 41 eingeschraubt (s. Fig. 8a).

Die Vielzahl der Schlüsselflächen 38 mit den zugeordneten Gewindebohrungen 39 ermöglicht bei der Montage eine größere Flexibilität, da beim Einlegen der Verdrehsicherungsplatte 41 die günstigste Stellung einer Schlüsselfläche 38 gewählt werden kann.

Eine weitere Ausführungsform für die Verliersicherung der Verdrehsicherungsplatte 41 ist in Fig. 8b dargestellt. Bei dieser Variante wird der Gewindestift 42 durch die Montagebohrung 43 der Außenhülse 1 und die darunterliegende Montagebohrung 44 der Spindelmutter 6 in die Gewindebohrung 46 der Verdrehsicherungsplatte 41 eingeschraubt. Die Gewindebohrungen 39 in der Sicherungsmutter 8 entfallen hierbei.

Die Figur 7 stellt einen teilweisen Längsschnitt durch die Stützwinde gemäß der zweiten Ausführungsform dar. Die Spindel 5 ist auch bei dieser Ausführungsform in einem Spindellager 23 gelagert. In der Figur 7 ist die Stützwinde in eingefahrenem Zustand gezeigt, die Spindelmutter 6 und eine oberhalb davon angeordnete Sicherungsmutter 8 befinden sich in räumlicher Nähe zu dem Spindellager 23. Abweichend von der ersten Ausführungsform ist die Sicherungsmutter 8 nicht mit der gegenüber der Außenhülse 1 verfahrbaren Innenhülse 2 verbunden, sondern mittels einer Verdrehsicherungsplatte 41, die zwischen Spindelmutter 6 und Sicherungsmutter 8 eingepaßt ist, gegen Mitdrehen gesichert. Dabei liegt der Stützsockel 37 der Sicherungsmutter 8 an der darunterliegenden Spindelmutter 6 auf, während der Bereich des Rücksprungs 33 zur Spindelmutter 6 beabstandet ist.

Im Falle eines Bruchs der Spindelmutter 6 versucht sich die Innenhülse 2 und die damit verbundene Spindelmutter 6 aufgrund der Auflast in Richtung Spindellager 23 zu schieben, wird jedoch durch den Stützsockel 37 der Sicherungsmutter 8 daran gehindert. Mit zunehmender Last beginnt sich die Sicherungsmutter 8 in Richtung der dem Stützsockel 37 gegenüberliegenden Seite zu neigen und dabei die Spindel 5 zu verbiegen, wodurch eine Sperrwirkung gegen eine weitere Benutzung erzielt wird.

Die Figuren 8a und 8b zeigen einen detaillierten Längsschnitt durch den oberen Bereich der Stützwinde bei eingefahrener Innenhülse 2. Die Sicherungsmutter 8 wird zumindest teilweise in der Ausnehmung 27a der Spindelmutter 6 aufgenommen. Gegen ein Mitdrehen der Sicherungsmutter 8 ist einseitig zwischen der Schlüsselfläche 38 der Sicherungsmutter 8 und der Wandung 45 der Spindelmutter 6 die Verdrehsicherungsplatte 41 eingepaßt. Um zu verhindern, daß sich die Verdrehsicherungsplatte 41 beim Transport oder Durchfahren starker Schlaglöcher aus ihrer vorgesehenen Position verschiebt, wird sie bereits bei der Montage mit einem Gewindebolzen 42 fixiert. Bei der Ausführungsform gemäß Figur 8a geschieht dies durch Einschrauben des Gewindebolzens 42 in eine Gewindebohrung 39 in der Sicherungsmutter 8, die direkt oberhalb der Verdrehsicherungsplatte 41 liegt. Durch eine geeignete Ausbildung der Kontur der Verdrehsicherungsplatte 41 ist sichergestellt, daß diese nicht in der Lage ist, seitlich an dem Gewindebolzen 42 nach oben auszuweichen.

Bei der Fixierung gemäß Figur 8b wird der Gewindebolzen 42 durch die Montagebohrung 43 der Außenhülse 1 und die darunterliegende Montagebohrung 44 der Spindelmutter 6 in die Gewindebohrung 46 der Verdrehsicherungsplatte 41 eingeschraubt.

Ein Entfernen der Verdrehsicherungsplatte 41 bei eingeschraubtem Gewindebolzen 42 ist dadurch jedoch nicht möglich.

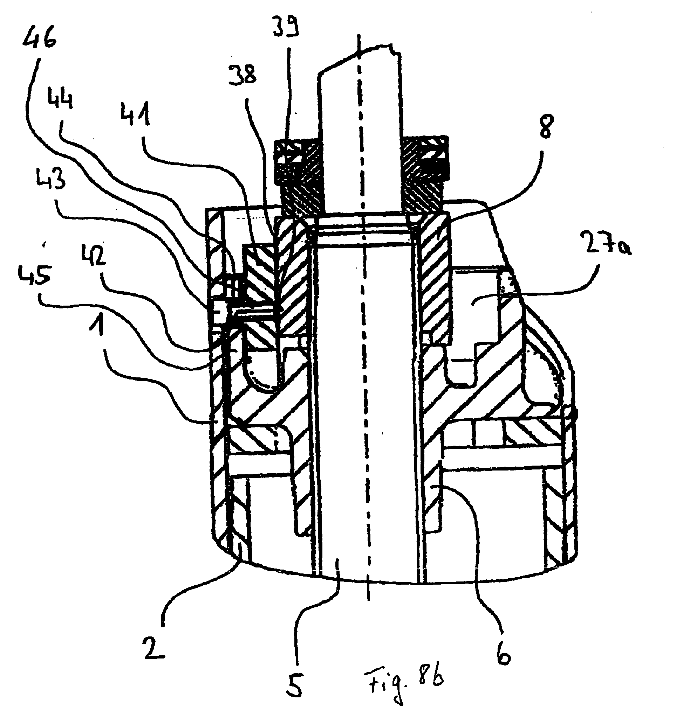

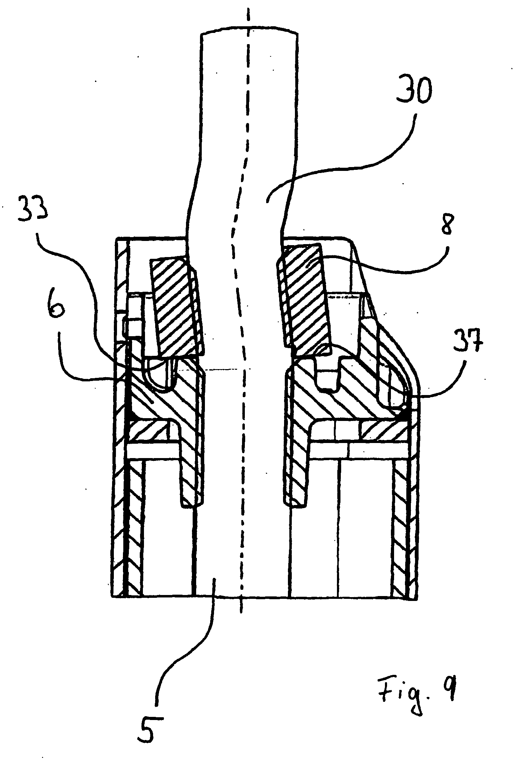

Die Figur 9 zeigt eine Ansicht gemäß Figur 8a und 8b bei gebrochener Spindelmutter 6 mit verbogener Spindel 5. Aufgrund des Bruchs der Spindelmutter 6 ist diese auf der Spindel 5 nach oben gerutscht und hat zunächst an dem Stützsockel 37 ein Wiederlager gefunden. Durch Einleitung einer größeren Last beginnt die Sicherungsmutter 8 jedoch in Richtung des Rücksprungs 33 zu kippen, bis die Sicherungsmutter 8 ebenfalls auf der Spindelmutter 6 zur Auflage kommt. Die Kippbewegung der Sicherungsmutter 8 hat die Verbiegung 30 der Spindel 5 zur Folge, welche eine Weiterbenutzung der Stützwinde ausschließt.

### Bezugszeichen

- 1: Außenhülse
- 2: Innenhülse
- 3: Abstützelement
- 4: Antriebseinrichtung
- 5: Spindel
- 6: Spindelmutter
- 7: axiale Richtung der Spindel
- 8: Sicherungsmutter
- 9: Innenfläche der Seitenwände
- 10: Stützrand
- 11: Innenrohr
- 12: Stirnseite Innenrohr
- 13: Außenmaß Sicherungsmutter
- 14: Innenmaß der Innenhülse
- 15: Bolzen Sicherungsmutter
- 16: Langloch
- 17: Achse maximaler Lochweite der Langlöcher
- 18: dem Stützrand gegenüberliegende Seitenwand der Innenhülse
- 19: Schweißnaht
- 20: Bolzen Spindelmutter
- 21: Stützfuß
- 22: Kegelradanordnung
- 23: Spindellager
- 24: Rand Spindelmutter
- 25: Rand Sicherungsmutter
- 26: Ausfahrweg
- 27a: Ausnehmung Spindelmutter
- 27b: Ausnehmung Sicherungsmutter
- 28: Achse senkrecht auf Innenrohr
- 29a,b,c,d: Seitenwand Innenrohr
- 30: Verbiegung Spindel
- 31: Zwischenraum
α Winkelschrägstellung Stirnseite
β Winkelschrägstellung Achse 17
- 32: Unterseite Sicherungsmutter
- 33: Rücksprung
- 34: Mittenabstand
- 35: Teilabschnitt
- 36: Außenmaß
- 37: Stützsockel
- 38: Schlüsselfläche
- 39: Gewindebohrung in Sicherungsmutter
- 40: Anschraubplatte
- 41: Verdrehsicherungsplatte
- 42: Gewindebolzen
- 43: Montagebohrung Außenhülse
- 44: Montagebohrung Spindelmutter
- 45: Wandung Spindelmutter
- 46: Gewindebohrung in 41

## Patentansprüche

1. Stützwinde mit einem in seiner Höhe teleskopartig verfahrbaren, eine Außenhülse (1) und eine Innenhülse (2) aufweisenden Abstützelement (3), mit einer in dem Abstützelement (3) gelagerten, von einer Antriebseinrichtung antreibbaren Spindel (5), und mit einer mit der Spindel (5) zusammenwirkenden, mit der Innenhülse (2) in Eingriff stehenden Spindelmutter (6), **dadurch gekennzeichnet,**
**daß** auf der Spindel (5) zusätzlich zu der Spindelmutter (6) eine gegenüber der Innenhülse (2) drehfest angebrachte Sicherungsmutter (8) angeordnet ist.

2. Vorrichtung nach Anspruch 1, **dadurch gekennzeichnet, daß** die Sicherungsmutter (8) unterhalb der Spindelmutter (6) angeordnet ist.

3. Vorrichtung nach Anspruch 1 oder 2, **dadurch gekennzeichnet, daß** die Sicherungsmutter (8) drehfest mit der Innenhülse (2) verbunden ist.

4. Vorrichtung nach einem der Ansprüche 1 bis 3, **dadurch gekennzeichnet, daß** die Sicherungsmutter (8) in axialer (7) Richtung der Spindel (5) beweglich angeordnet ist.

5. Vorrichtung nach einem der Ansprüche 1 bis 4, **dadurch gekennzeichnet, daß** die Sicherungsmutter (8) bei Lastaufnahme einseitig auf einem an einer Innenwand (9) der Innenhülse (2) angeordneten Stützrand (10) aufliegt.

6. Vorrichtung nach Anspruch 5, **dadurch gekennzeichnet, daß** der Stützrand (10) aus einem orstfest in der Innenhülse (2) angeordneten Innenrohr (11) mit spindelmutterseitig schräger Stirnseite (12) ausgebildet ist.

7. Vorrichtung nach einem der Ansprüche 1 bis 6, **dadurch gekennzeichnet, daß** die Außenmaße (13) der Sicherungsmutter (8) kleiner als die Innenmaße (14) der Innenhülse (2) ausgebildet sind.

8. Vorrichtung nach Anspruch 6 oder 7, **dadurch gekennzeichnet, daß** die Sicherungsmutter (8) mittels zweier gegenüberliegender Bolzen (15) mit dem Innenrohr (11) und der Innenhülse (2) verbunden ist.

9. Vorrichtung nach Anspruch 8, **dadurch gekennzeichnet, daß** die Bolzen (15) mittels Langlöchern (16) in Innenhülse (2) und Innenrohr (11) gelagert sind.

10. Vorrichtung nach Anspruch 9, **dadurch gekennzeichnet, daß** die durch die maximale Lochweite der Langlöcher (16) verlaufende Achse (17) in Richtung der dem Stützpunkt gegenüberliegenden Seitenwand (18) geneigt ist.

11. Vorrichtung nach einem der Ansprüche 6 bis 10, **dadurch gekennzeichnet, daß** eine Schweißnaht (19) des Innenrohres (11) auf der dem Stützpunkt (10) gegenüberliegenden Seitenwand ausgebildet ist.

12. Vorrichtung nach Anspruch 1, **dadurch gekennzeichnet, daß** die Sicherungsmutter (8) oberhalb der Spindelmutter (6) angeordnet ist

13. Vorrichtung nach Anspruch 12, **dadurch gekennzeichnet, daß** die Sicherungsmutter (8) drehfest mit der Spindelmutter (6) verbunden ist.

14. Vorrichtung nach Anspruch 12 oder 13, **dadurch gekennzeichnet, daß** die Sicherungsmutter (8) auf ihrer Unterseite (32) abschnittsweise einen Rücksprung (33) aufweist.

15. Vorrichtung nach enem der Ansprüche 1 bis 14, **dadurch gekennzeichnet, daß** die Materialien der Spindel (5) und der Sicherungsmutter (8) derart beschaffen sind, daß es bei der Lastaufnahme der Sicherungsmutter (8) zu einem Festfressen von Spindel (5) und Sicherungsmutter (8) kommt.

## Claims

1. Support jack with a vertically telescopically displaceable supporting element (3) having an outer sleeve (1) and an inner sleeve (2), with a spindle (5) which is mounted in the supporting element (3) and can be driven by a drive arrangement, and with a spindle nut (6) which interacts with the spindle (5) and is in engagement with the inner sleeve (2), **characterized in that**, in addition to the spindle nut (6), a safety nut (8) mounted in a rotationally fixed manner in relation to the inner sleeve (2) is arranged on the spindle (5).

2. Device according to Claim 1, **characterized in that** the safety nut (8) is arranged below the spindle nut (6).

3. Device according to Claim 1 or 2, **characterized in that** the safety nut (8) is connected to the inner sleeve (2) in a rotationally fixed manner.

4. Device according to one of Claims 1 to 3, **characterized in that** the safety nut (8) is arranged movably in the axial direction (7) of the spindle (5).

5. Device according to one of Claims 1 to 4, **characterized in that**, when taking up load, the safety nut (8) lies on one side on a support edge (10) arranged on an inner wall (9) of the inner sleeve (2).

6. Device according to Claim 5, **characterized in that** the support edge (10) is formed by an inner tube (11) which is arranged in a stationary manner in the inner sleeve (2) and has an inclined end side (12) on the lock-nut side.

7. Device according to one of Claims 1 to 6, **characterized in that** the external dimensions (13) of the safety nut (8) are designed to be smaller than the internal dimensions (14) of the inner sleeve (2).

8. Device according to Claim 6 or 7, **characterized in that** the safety nut (8) is connected to the inner tube (11) and the inner sleeve (2) by means of two opposite bolts (15).

9. Device according to Claim 8, **characterized in that** the bolts (15) are mounted in inner sleeve (2) and inner tube (11) by means of elongate holes (16).

10. Device according to Claim 9, **characterized in that** the axis (17) extending through the maximum hole width of the elongate holes (16) is inclined in the direction of the side wall (18) lying opposite the support point.

11. Device according to one of Claims 6 to 10, **characterized in that** a weld seam (19) of the inner tube (11) is designed on the side wall lying opposite the support point (10).

12. Device according to Claim 1, **characterized in that** the safety nut (8) is arranged above the spindle nut (6).

13. Device according to Claim 12, **characterized in that** the safety nut (8) is connected to the spindle nut (6) in a rotationally fixed manner.

14. Device according to Claim 12 or 13, **characterized in that** the safety nut (8) has a return (33) over part of its lower side (32).

15. Device according to one of Claims 1 to 14, **characterized in that** the materials of the spindle (5) and of the safety nut (8) are of such a nature that, when the safety nut (8) takes up load, spindle (5) and safety nut (8) jam.

## Revendications

1. Cric comprenant un élément d'appui (3) pouvant être déplacé de manière télescopique dans le sens de la hauteur et présentant un manchon extérieur (1) et un manchon intérieur (2), comprenant une broche logée dans l'élément d'appui (3) et pouvant être entraînée par un dispositif d'entraînement, et comprenant un écrou de broche (6) agissant conjointement avec la broche (5) et en prise avec le manchon intérieur (2), **caractérisé en ce qu'**un écrou de blocage (8) monté de manière à ne pas pouvoir tourner par rapport au manchon intérieur (2) est disposé sur la broche (5) en plus de l'écrou de broche (6).

2. Dispositif selon la revendication 1, **caractérisé en ce que** l'écrou de blocage (8) est disposé sous l'écrou de broche (6).

3. Dispositif selon la revendication 1 ou 2, **caractérisé en ce que** l'écrou de blocage (8) est relié avec le manchon intérieur (2) de manière à ne pas pouvoir tourner par rapport à lui.

4. Dispositif selon l'une des revendications 1 à 3, **caractérisé en ce que** l'écrou de blocage (8) est disposé de manière à pouvoir se déplacer dans le sens axial (7) de la broche (5).

5. Dispositif selon l'une des revendications 1 à 4, **caractérisé en ce que** l'écrou de blocage (8), lors d'une mise en charge, repose d'un côté sur un bord d'appui (10) disposé sur une paroi intérieure (9) du manchon intérieur (2).

6. Dispositif selon la revendication 5, **caractérisé en ce que** la paroi d'appui (10) est formée à partir d'un tube intérieur (11) disposé en un endroit fixe dans le manchon intérieur (2) et muni d'un côté frontal (12) biseauté du côté de l'écrou de broche.

7. Dispositif selon l'une des revendications 1 à 6, **caractérisé en ce que** la cote extérieure (13) de l'écrou de blocage (8) est inférieure à la cote intérieure (14) du manchon intérieur (2).

8. Dispositif selon la revendication 6 ou 7, **caractérisé en ce que** l'écrou de blocage (8) est relié avec le tube intérieur (11) et le manchon intérieur (2) au moyen de deux boulons (15) opposés l'un à l'autre.

9. Dispositif selon la revendication 8, **caractérisé en ce que** les boulons (15) sont logés dans le manchon intérieur (2) et le tube intérieur (11) au moyen de trous oblongs (16).

10. Dispositif selon la revendication 9, **caractérisé en ce que** l'axe (17) qui s'étend à travers la largeur maximale du trou oblong (16) est incliné en direction de la paroi latérale (18) à l'opposé du point d'appui.

11. Dispositif selon l'une des revendications 6 à 10, **caractérisé en ce qu'**un cordon de soudure (19) du tube intérieur (11) est formé sur la paroi latérale à l'opposé du point d'appui (10).

12. Dispositif selon la revendication 1, **caractérisé en ce que** l'écrou de blocage (8) est disposé au-dessus de l'écrou de broche (6).

13. Dispositif selon la revendication 12, **caractérisé en ce que** l'écrou de blocage (8) est relié avec l'écrou de broche (6) de manière à ne pas pouvoir tourner par rapport à lui.

14. Dispositif selon la revendication 12 ou 13, **caractérisé en ce que** l'écrou de blocage (8) présente par sections sur son côté inférieur (32) un retrait (33).

15. Dispositif selon l'une des revendications 1 à 14, **caractérisé en ce que** les matériaux de la broche (5) et de l'écrou de blocage (8) sont tels que lors de la mise en charge de l'écrou de blocage (8), il se produit un grippage de la broche (5) et de l'écrou de blocage (8).
